# EUROPEAN PATENT SPECIFICATION

(11) **EP 2 819 898 B1**
(45) Date of publication and mention of the grant of the patent: **10.04.2019**
(21) Application number: 13755387.1
(22) Date of filing: 21.02.2013
(51) Int. Cl.: B60T 7/12, B60T 7/22, B60K 28/12, B60T 8/58, B60T 17/18, B60W 10/184

(54) **METHOD AND SYSTEM FOR EMERGENCY BRAKING OF MOTOR VEHICLE**
VERFAHREN UND SYSTEM ZUR NOTBREMSUNG EINES KRAFTFAHRZEUGES
PROCÉDÉ ET SYSTÈME DE FREINAGE D'URGENCE DE VÉHICULE MOTORISÉ

(30) Priority: 28.02.2012 SE 1250180
(43) Date of publication of application: 07.01.2015
(73) Proprietor: Scania CV AB, 151 87 Södertälje (SE)
(72) Inventor: SAMUELSSON, Peter, SE-64791 Mariefred (SE); HESSE, Johan, SE-61156 Nyköping (SE); WINSA, Daniel, SE-97343 Luleå (SE); DE NIJS, Marco, SE-64333 Vingåker (SE)
(74) Representative: Scania CV AB
(86) International application number: PCT/SE2013/050152
(87) International publication number: WO 2013/129995

(56) References cited:
- EP-A1- 2 165 894
- EP-A2- 0 891 903
- WO-A1-2004/108495
- WO-A1-2011/126441
- WO-A1-2011/126441
- DE-A1- 10 237 714
- DE-A1- 10 258 617
- DE-A1- 10 258 617
- DE-A1-102008 045 481
- DE-A1-102008 045 481
- DE-A1-102011 005 395
- DE-A1-102011 005 395
- US-A- 6 084 508
- US-A1- 2006 163 943
- US-A1- 2006 232 124

## Description

### TECHNICAL FIELD

The invention relates to a method for emergency braking according to claim 1. The invention relates to a system for emergency braking according to claim 9. It relates also to a motor vehicle. It relates as well to a computer programme and a computer programme product.

### BACKGROUND

On certain markets the authorities require motor vehicles such as buses to come to a halt automatically, i.e. without driver intervention, if emergency opening of the doors is triggered, and this requirement applies even when the bus is in motion.

If the bus is equipped with pneumatic doors and ramps, emergency opening of the door system may cause its depressurisation, potentially leading to doors opening and ramps deploying. If this happens when the vehicle is in motion, there is great risk of harm to pedestrians outside the vehicle.

A known arrangement is automatic braking of a vehicle if any of its doors open when it is in motion. For example, WO2011/126441 refers to a system for automatically brake a vehicle if it is detected that anything is trapped in the vehicle's doors or windows when it has begun to move away from a boarding point. GB1266064 refers to an automated brake system which can brake a vehicle automatically if the doors open when the vehicle is in motion. GB694228 likewise refers to an automated brake system which can brake a vehicle automatically if the doors open when the vehicle is in motion. US2003006644 describes a brake management system which can be controlled inter alia by signals from a retractable/deployable ramp.

### OBJECTS OF THE INVENTION

One object of the present invention is to propose a method for emergency braking of motor vehicles which makes safe and effective braking possible. One object of the present invention is to propose a system for emergency braking of motor vehicles which makes safe and effective braking possible.

### SUMMARY OF THE INVENTION

These and other objects indicated by the description set out below are achieved by a method and system for emergency braking, a motor vehicle, a computer programme and a computer programme product of the kind indicated in the introduction which further present the features indicated in the characterising parts of the attached independent claims 1, 9, 17 and 18. Preferred embodiments of the method and the system are defined in the attached dependent claims 2-8 and 10-16.

The invention achieves the objects with a method for emergency braking of a moving motor vehicle, comprising the steps of continuously monitoring whether there is any reason to prevent movement of the vehicle, and automatically braking the vehicle if there is such reason, which step of automatically braking the vehicle comprises the step of activating an emergency brake function which caters for braking by means of the vehicle's service brake. Using the service brake for said emergency braking makes safe and effective braking possible in that safety functions of the brake system such as locking-free braking, electronic brake systems for rapid response and anti-skid systems may be used. Using the vehicle's existing brake systems also makes it possible to control the actual braking process so that it can take place in a controlled way such as to avoid over-powerful braking leading to uncontrolled movement of the vehicle, or weak braking leading to too long braking distances. Said emergency brake function further comprises the step of continuously determining the vehicle's actual speed and using it as a basis for controlling brake torque employed, on the basis of desired deceleration of the vehicle. An effective way of achieving safe and effective braking of the vehicle is thus made possible.

In one embodiment of the method, said emergency brake function comprises using the vehicle's system for locking-free braking by its existing brake system. Safety during said emergency braking is thus improved.

In one embodiment of the method, said emergency brake function comprises using the antiskid system of the vehicle's existing brake system. Safety during said emergency braking is thus improved.

In one embodiment of the method, said emergency brake function comprises control of the brake torque employed by the vehicle, on the basis of desired deceleration of the vehicle. Safe and effective braking of the vehicle for controlled braking is thus made possible.

In one embodiment of the method, said emergency brake function caters for initial braking by means of a predetermined brake torque corresponding to relatively gentle braking. Said initial braking with a predetermined brake torque corresponding to relatively gentle braking makes it possible, where the brake torque is relatively small, to avoid over-powerful braking initially, thereby improving safety inter alia in that unnecessarily powerful braking does not take place initially, e.g. when the vehicle is travelling uphill.

In one embodiment of the method, the step of activating said emergency brake function comprises the step of blocking the acceleration function. Blocking the acceleration function, i.e. preventing the driver from applying acceleration to the vehicle's propulsion, e.g. via an accelerator pedal, avoids risky manoeuvres which might hamper braking, and makes safer and more effective braking possible.

In one embodiment of the method, said emergency brake function caters for the possibility of the vehicle's driver overriding said automatic braking. Providing the driver with the possibility of overriding said automatic braking by using the brake pedal to demand greater brake torque than that demanded via the emergency brake function enables the driver when necessary, e.g. when faced with an unforeseen obstacle, to effect quicker braking. Safety is thus further improved.

In one embodiment, the method comprises the step of deactivating said emergency brake function and activating a stopping-place brake function when the vehicle is found to be stationary and said reason continues to apply. The result is an effective and safe way of preventing the vehicle, when it is stationary or comes to a halt, from being allowed to move, and the stopping-place brake function in one variant comprises an active state in which a brake pressure which makes it impossible for the vehicle to move off is activated.

The invention achieves the objects with a system for emergency braking of a moving motor vehicle, comprising means for continuously monitoring whether there is any reason to prevent movement of the vehicle, and means for automatically braking the vehicle if there is such reason, which means for automatically braking the vehicle comprise means for activating an emergency brake function which caters for braking by using the vehicle's usual existing brake system. Using the usual existing brake system for said emergency braking makes safe and effective braking possible in that safety functions of the brake system such as locking-free braking, electronic brake systems for rapid response and anti-skid systems may be used. Using the vehicle's existing brake systems also makes it possible to control the actual braking process so that it can take place in a controlled way such as to avoid over-powerful braking leading to uncontrolled movement of the vehicle, or weak braking leading to too long braking distances.

In one embodiment of the system, said emergency brake function comprises means for using the vehicle's system for locking-free braking by its existing brake system. Safety during said emergency braking is thus improved.

In one embodiment of the system, said emergency brake function comprises means for using the antiskid system of the vehicle's existing brake system. Safety during said emergency braking is thus improved.

In one embodiment of the system, said emergency brake function comprises means for control of the brake torque employed by the vehicle, on the basis of desired deceleration of the vehicle. Safe and effective braking of the vehicle for controlled braking is thus made possible.

In one embodiment of the system, said emergency brake function comprises means for continuously determining the vehicle's actual speed and using it as a basis for controlling brake torque employed, on the basis of desired deceleration of the vehicle. An effective way of achieving safe and effective braking of the vehicle is thus made possible.

In one embodiment of the system, said emergency brake function comprises means for initial braking by means of a predetermined brake torque corresponding to relatively gentle braking. Said initial braking with a predetermined brake torque corresponding to relatively gentle braking makes it possible, where the brake torque is relatively small, to avoid over-powerful braking initially, thereby improving safety inter alia in that unnecessarily powerful braking does not take place initially, e.g. when the vehicle is travelling uphill.

According to an embodiment of the system, said means for activating emergency brake function comprise means for blocking the acceleration function. Blocking the acceleration function, i.e. preventing the driver from applying acceleration to the vehicle's propulsion, e.g. via an accelerator pedal, avoids risky manoeuvres which might hamper braking, and makes safer and more effective braking possible.

In one embodiment the system comprises means for deactivating said emergency brake function and activating a stopping-place brake function when the vehicle is found to be stationary and said reason continues to apply. The result is an effective and safe way of preventing the vehicle, when it is stationary or comes to a halt, from being allowed to move, and the stopping-place brake function in one variant comprises an active state in which a brake pressure which makes it impossible for the vehicle to move off is activated.

### DESCRIPTION OF DRAWINGS

The present invention will be better understood from reading the detailed description set out below in conjunction with the attached drawings, in which the same reference notations are used for similar parts throughout the various views and
Fig. 1 schematically illustrates a motor vehicle according to an embodiment of the present invention.
Fig. 2 is a schematic block diagram of a system I for emergency braking of a motor vehicle according to an embodiment of the present invention,
Fig. 3 is a schematic block diagram of a method for emergency braking of a moving motor vehicle according to an embodiment of the present invention,
Fig. 4 is a schematic block diagram of a method for emergency braking of a moving motor vehicle according to an embodiment of the present invention, and
Fig. 5 schematically illustrates a computer according to an embodiment of the present invention.

### DESCRIPTION OF EMBODIMENTS

The term "link" refers herein to a communication link which may be a physical connection, e.g. an opto-electronic communication line, or a non-physical connection, such as a wireless connection, e.g. a radio link or microwave link.

The term "usual existing brake system" refers herein to a brake system of a vehicle normally used by the driver, provided with service brakes, which system comprises brake pedals and electronic brake systems for quicker response and more effective control of brakes, and electronic control units to control the braking. The existing brake system comprises according to variants functions for locking-free braking, so-called ABS, and antiskid systems. The term "usual existing brake system" does not refer to a separate emergency brake system or panic brake system or equivalent.

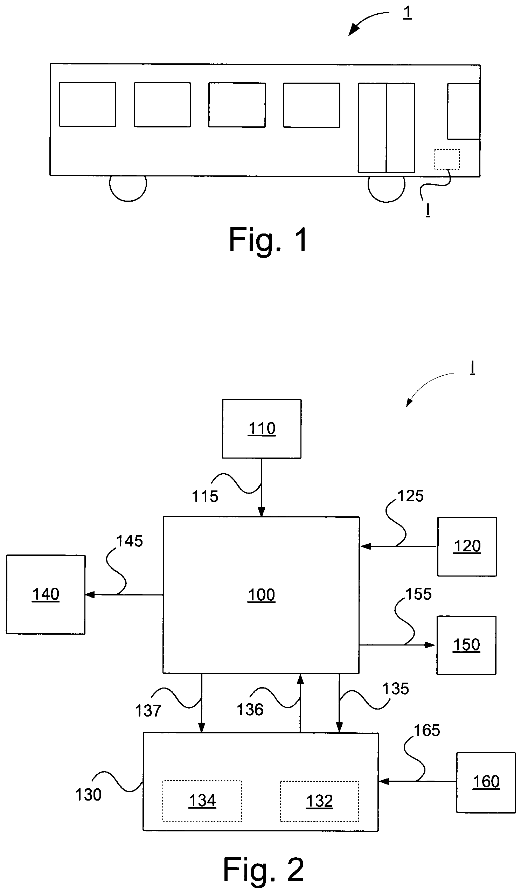

Fig. 1 illustrates schematically a motor vehicle 1 according to an embodiment of the present invention. The vehicle here exemplified is a heavy vehicle in the form of a bus. It may alternatively be a truck or a car. The vehicle is provided with a system for emergency braking according to the present invention.

Fig. 2 is a schematic block diagram of a system I for emergency braking of a motor vehicle according to an embodiment of the present invention.

The system I comprises an electronic control unit 100 for said emergency braking.

The system 1 comprises movement hindrance monitoring means 110 to continuously monitor whether there are reasons to prevent/halt movement of the vehicle. Said means 110 comprise sensor means by which said reasons for preventing/halting movement of the vehicle are determined. Examples of reasons for prevention of movement comprise a door having opened, a loading and unloading ramp having deployed, an engine bonnet having opened and/or a loading hatch having opened. Said reasons for preventing/halting movement of the vehicle may take the form of any movement-hindering part of the vehicle which might be a hazard to continued movement.

The system I further comprises vehicle speed determination means 120 to determine the vehicle's speed.

The system I further comprises a vehicle brake system 130 to brake the vehicle. Said system 130 comprises the vehicle's usual existing brake system.

Said vehicle brake system 130 comprises an emergency brake function 132 which caters for braking by means of the vehicle's usual existing brake system. Said existing brake system of the system 130 comprises functions for locking-free braking and antiskid system. Said emergency brake function 132 caters for using the vehicle's system for locking-free braking by its existing brake system.

Said vehicle brake system 130 comprises a stopping-place brake function 134 which caters for braking by means of the vehicle's stopping-place brake.

The system I further comprises an acceleration means 140 for supplying fuel to propel the vehicle. This means 140 comprises in one embodiment an accelerator pedal unit.

The system I further comprises warning means 150 to warn the driver that a hindrance to movement has been detected and/or that an emergency brake function has been activated so that the vehicle is automatically subjected to emergency braking. Said means 150 may comprise warnings on display units, warnings by acoustic alarm signals or the like.

The system I further comprises a service brake means 160 which in one embodiment comprises a brake pedal unit.

The electronic control unit 100 is signal-connected to said movement hindrance monitoring means 110 via a link 115, enabling it to receive from said means 110 a signal which represents movement hindrance data.

The electronic control unit 100 is signal-connected to said vehicle speed determination means 120 via a link 125, enabling it to receive from said means 120 a signal which represents speed data.

The electronic control unit 100 is signal-connected to said vehicle brake system 130 via a link 135, enabling it to send to an emergency brake function 132 of said system 130 a signal which represents activation data for activation/deactivation of the emergency brake function and, when emergency brake function is activated, emergency brake torque data for demanding brake torque for desired deceleration of the vehicle.

The electronic control unit 100 is signal-connected to said vehicle brake system 130 via a link 136, enabling it to receive from said emergency brake function 132 of said system 130 a signal which represents information about actual deceleration with the desired brake torque.

The electronic control unit 100 is signal-connected to said vehicle brake system 130 via a link 137, enabling it to send to the stopping-place brake function 134 of said system 130 a signal which represents activation data for activation/deactivation of stopping-place brake function and, when stopping-place brake function is activated, stopping-place brake torque data for demanding brake torque to keep the vehicle in the stationary state.

The electronic control unit 100 is signal-connected to said acceleration means 140 via a link 145, enabling it to send to said means 140 a signal which represents blocking data for blocking of the acceleration function so that the driver cannot apply acceleration to the vehicle by using for example an accelerator pedal.

The electronic control unit 100 is signal-connected to said warning means 150 via a link 155, enabling it to send to said means 150 a signal which represents warning data to warn the driver that hindrance to movement has been detected and/or that an emergency brake function has been activated.

The brake system 130 is signal-connected to said service brake means 160 via a link 165, enabling it to receive from said means 160 a signal which represents brake torque data for brake torque demanded by the driver.

The electronic control unit 100 is adapted to processing said movement hindrance data and speed data. If said hindrance data correspond to a hindrance to movement such as a door which has opened and said speed data are greater than zero, i.e. the vehicle is in motion, the electronic control unit will send to the brake system 130 a signal which represents activation data for activating the emergency brake function 132, which responds to activation by catering for initial braking by means of a predetermined brake torque corresponding to relatively gentle braking, e.g. 2 m/s².

The electronic control unit 100 is adapted to continuously processing deceleration data from the emergency brake function 132 of the brake system 130 and speed data in order to determine the vehicle's actual deceleration, compare it with demanded/desired deceleration and then use the comparison as a basis for sending to the brake system's emergency brake function a signal to adapt the brake torque to the vehicle's demanded/desired deceleration.

If said hindrance data correspond to a hindrance to movement such as an opened door and said speed data are greater than zero, i.e. the vehicle is in motion, the electronic control unit 100 will send to the acceleration means 140 a signal which represents blocking data for blocking of the acceleration function so that the driver cannot apply acceleration to the vehicle by using for example an accelerator pedal.

If said hindrance data correspond to a hindrance to movement such as an opened door and said speed data are zero, i.e. the vehicle is stationary, the electronic control unit 100 will send to the brake system 130 a signal which represents activation data to activate the stopping-place brake function 134 and at the same time deactivate the emergency brake function 132, whereupon the stopping-place brake function will respond to activation by itself activating brake means with a predetermined brake torque corresponding to a strong brake pressure to make it impossible for the vehicle to move off/be set in motion.

If the emergency brake function 132 is activated, said movement hindrance data do not correspond to any hindrance and the vehicle's speed is greater than zero, the electronic control unit 100 is adapted to sending to the brake system 130 a signal to deactivate the emergency brake function so that emergency braking ceases and the vehicle is allowed to continue its journey. If the stopping-place brake function 134 is activated, said movement hindrance data do not correspond to any hindrance and the vehicle's speed is zero, the electronic control unit 100 is adapted to sending to the brake system 130 a signal to deactivate the stopping-place brake function so that stopping-place braking ceases and the vehicle is allowed to move off.

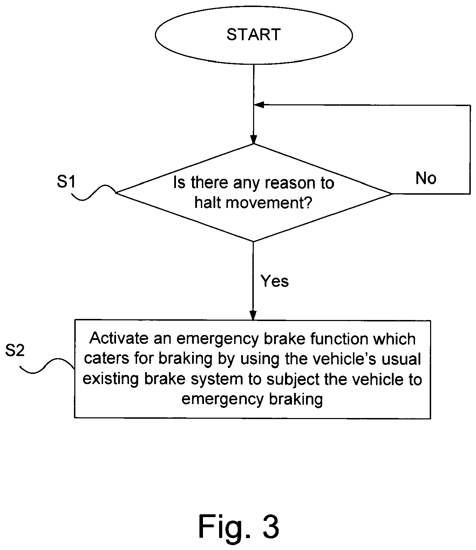

Fig. 3 is a schematic block diagram of a method for emergency braking of a moving motor vehicle according to an embodiment of the present invention.

In one embodiment the method for emergency braking of a moving motor vehicle comprises a first step S1 of continuously monitoring whether there is any reason to prevent movement of the vehicle.

In one embodiment the method for emergency braking of a moving motor vehicle comprises a second step S2 of the vehicle being braked automatically if there is such reason, comprising activation of an emergency brake function which caters for braking by means of the vehicle's usual existing brake system.

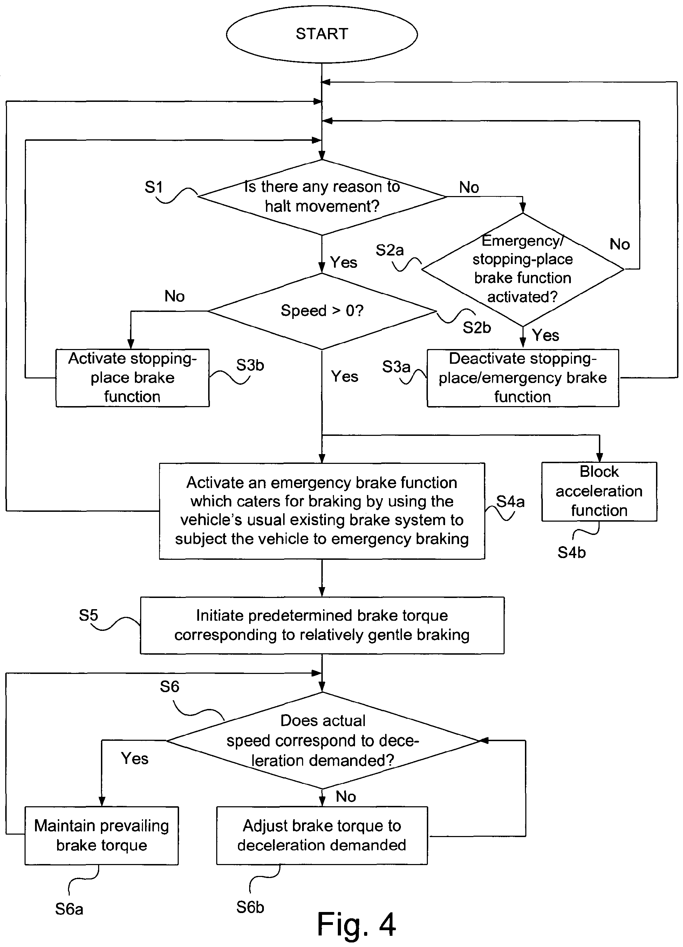

Fig. 4 is a schematic block diagram of a method for emergency braking of a moving motor vehicle according to an embodiment of the present invention.

A first step S1 monitors continuously whether there is any reason to prevent movement of the vehicle.

If there is no such reason, a step S2a investigates whether an emergency brake function or stopping-place brake function of the vehicle's brake system has been activated.

If there is no such reason and the emergency brake function or the stopping-place brake function has not been activated, step S1 investigates again whether there is any reason to prevent movement of the vehicle, and this step therefore takes place continuously.

If there is no such reason and the emergency brake function or the stopping-place brake function has been activated, a step S3a deactivates the emergency brake function or the stopping-place brake function, and step S1 again investigates whether there is any reason to prevent movement.

If there is such reason, a step S2b investigates whether the vehicle speed is greater than zero, i.e. whether the vehicle is in motion or stationary.

If there is such reason and the vehicle's speed is zero, i.e. the vehicle is stationary, a step S3b activates a stopping-place brake function to activate stopping-place brakes, and step S1 again investigates whether there is any reason to prevent movement.

If there is such reason and the vehicle's speed is greater than zero, i.e. the vehicle is in motion, a step S4a activates the emergency brake function to activate emergency brakes, catering for automatic braking by the vehicle's usual existing brake system. This is accompanied by continuous investigation whether there is still any reason to prevent movement and whether the vehicle is in motion.

If there is such reason and the vehicle's speed is greater than zero, i.e. the vehicle is in motion, a step S4b blocks the acceleration function of the vehicle's acceleration means, e.g. an accelerator pedal, so that the driver is not allowed to apply acceleration to the vehicle.

When emergency brake function is activated and the vehicle is in motion, a step S5 initiates a predetermined brake torque corresponding to relatively gentle braking.

Thereafter a step S6 investigates whether the vehicle's actual speed corresponds to its deceleration demanded.

If its actual speed corresponds to deceleration demanded, a step S6a maintains prevailing brake torque, accompanied by continuous investigation whether the vehicle's actual speed corresponds to its deceleration determined.

If the vehicle's actual speed does not correspond to its deceleration determined, a step S6b adjusts the brake torque to deceleration demanded, accompanied by continuous investigation whether the vehicle's actual speed corresponds to its deceleration demanded. If for example the vehicle's speed is too great, the brake torque is increased.

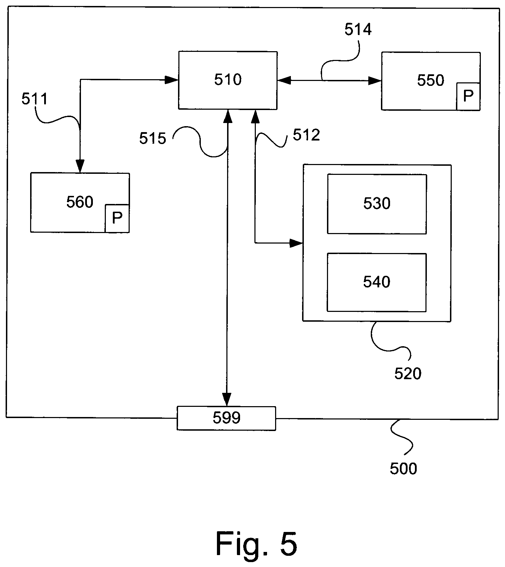

Figure 5 is a diagram of one version of a device 500. The control unit 100 and, where applicable, the brake system 130 described with reference to Figure 2 may in one version comprise the device 500. The device 500 comprises a non-volatile memory 520, a data processing unit 510 and a read/write memory 550. The non-volatile memory has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory has also a second memory element 540.

A proposed computer programme P comprises routines for making emergency braking of a moving motor vehicle possible according to the innovative method. The programme P comprises routines for continuously monitoring whether there is any reason to prevent movement of the vehicle. The programme comprises routines for automatically, if there is such reason, braking the vehicle by activating an emergency brake function which caters for braking by means of the vehicle's usual existing brake system. The programme P may be stored in an executable form or in compressed form in a memory 560 and/or in a read/write memory 550.

Where the data processing unit 510 is described as performing a certain function, it means that it conducts a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit via a data bus 511. The read/write memory 550 is adapted to communicating with the data processing unit via a data bus 514. The links associated for example with the control unit 100 may be connected to the data port.

When data are received on the data port 599, they are stored temporarily in the second memory element 540. When input data received have been temporarily stored, the data processing unit 510 is prepared to conduct code execution as described above. The signals received on the data port may be used by the device 500 to continuously monitor whether there is any reason to prevent movement of the vehicle. If there is such reason, the signals received on the data port may be used by the device 500 to automatically brake the vehicle, comprising activating an emergency brake function which caters for braking by means of the vehicle's usual existing brake system.

Parts of the methods herein described may be conducted by the device 500 by means of the data processing unit 510 which runs the programme stored in the memory 560 or the read/write memory 550. When the device 500 runs the programme, methods herein described are executed.

The above description of the preferred embodiments of the present invention is provided for illustrative and descriptive purposes. It is not intended to be exhaustive nor to restrict the invention to the variants described. Many modifications and variations will obviously suggest themselves to one skilled in the art. The embodiments have been chosen and described in order best to explain the principles of the invention and their practical applications and thus make it possible for one skilled in the art to understand the invention for different embodiments and with the various modifications appropriate to the intended use.

## Claims

1. A method for emergency braking of a moving motor vehicle, comprising the steps of
- continuously monitoring (S1) by sensor means (110) whether there is reasons to prevent movement of the vehicle wherein said reasons comprise an open door, a loading and unloading ramp which has deployed, an engine bonnet which has opened and a loading hatch which has opened, and
- automatically braking the vehicle if there is such reason, wherein the step of automatically braking the vehicle comprises the step of
- activating (S2; S4a) an emergency brake function (132) which caters for braking by means of the vehicle's service brake, and
- continuously determining (S2b) the vehicle's actual speed and using said speed as a basis for controlling brake torque employed, on the basis of desired deceleration of the vehicle.

2. A method according to claim 1, in which said emergency brake function (132) caters for using the vehicle's system for locking-free braking by its existing brake system (130).

3. A method according to claim 1 or 2, in which said emergency brake function (132) caters for using the antiskid system of the vehicle's existing brake system (130).

4. A method according to any one of claims 1-3, in which said emergency brake function (132) caters for control of the vehicle's brake torque employed, on the basis of desired deceleration of the vehicle.

5. A method according to any one of claims 1-4, in which said emergency brake function (132) caters for initial braking by means of a predetermined brake torque corresponding to relatively gentle braking.

6. A method according to any one of claims 1-5, in which the step of activating (S4a) emergency brake function (132) comprises the step of blocking (S4b) of acceleration function.

7. A method according to any one of claims 1-6, in which said emergency brake function (132) caters for the possibility for the vehicle's driver to override said automatic braking.

8. A method according to any one of claims 1-7, comprising the step of deactivating said emergency brake function (132) and activating a stopping-place brake function (134) when the vehicle is found to be stationary and said reason continues to apply.

9. A system (I) for emergency braking of a moving motor vehicle (1), comprising means (110) for continuously monitoring by sensor means (110) whether there is reasons to prevent movement of the vehicle wherein said reasons comprise an open door, a loading and unloading ramp which has deployed, an engine bonnet which has opened and a loading hatch which has opened, and means for automatically braking the vehicle if there is such reason, wherein said means for automatically braking the vehicle comprise means (100, 130) for activating an emergency brake function (132) which caters for braking by means of the vehicle's service brake, means (100, 120) for continuously determining the vehicle's actual speed and means (100, 130) for using said speed as a basis for controlling brake torque employed, on the basis of desired deceleration of the vehicle.

10. A system according to claim 9, in which said emergency brake function (132) caters for using the vehicle's system for locking-free braking by its existing brake system (130).

11. A system according to claim 9 or 10, in which said emergency brake function (132) caters for using the antiskid system of the vehicle's existing brake system (130).

12. A system according to any one of claims 9-11, in which said emergency brake function (132) caters for control of the vehicle's brake torque employed, on the basis of desired deceleration of the vehicle.

13. A system according to any one of claims 9-12, in which said emergency brake function (132) caters for initial braking by means of a predetermined brake torque corresponding to relatively gentle braking.

14. A system according to any one of claims 9-13, in which said means (100) for activating emergency brake function (132) comprise means (100, 140) for blocking acceleration function.

15. A system according to any one of claims 9-14, comprising means (100) for deactivating said emergency brake function (132) and activating a stopping-place brake function (134) when the vehicle is found to be stationary and said reason continues to apply.

16. A motor vehicle (1) provided with a system (I) for emergency braking of a motor vehicle according to any one of claims 9-15.

17. A computer programme (P) for emergency braking of a motor vehicle, which programme (P) comprises programme code which, when run by an electronic control unit (100) or another computer (500) connected to the electronic control unit (100), enables the electronic control unit (100) to perform steps according to claims 1-8.

18. A computer program product comprising a digital storage medium which stores the computer programme according to claim 17.

## Patentansprüche

1. Verfahren zum Notfallbremsen eines sich bewegenden Kraftfahrzeugs, umfassend die Schritte:
- kontinuierliches Überwachen (S1) durch Sensormittel (110), ob ein Grund vorliegt, die Bewegung des Fahrzeugs zu verhindern, wobei der Grund eine offene Tür, eine Belade- und Entladerampe, die ausgefahren ist, eine Motorhaube, die geöffnet wurde und eine Ladeluke, die geöffnet wurde, umfasst, und
- automatisches Bremsen des Fahrzeugs, falls ein solcher Grund vorliegt,
wobei der Schritt des automatischen Bremsens des Fahrzeugs die Schritte umfasst:
- Aktivieren (S2; S4a) einer Notfallbremsfunktion (132), die für ein Bremsen mittels der Betriebsbremse des Fahrzeugs sorgt, und
- kontinuierliches Bestimmen (S2b) der tatsächlichen Geschwindigkeit des Fahrzeugs und Verwenden der Geschwindigkeit als eine Grundlage zum Steuern eines eingesetzten Bremsmoments auf der Grundlage einer gewünschten Verzögerung des Fahrzeugs.

2. Verfahren gemäß Anspruch 1, bei welchem die Notfallbremsfunktion (132) für ein Verwenden des Systems des Fahrzeugs zum blockierfreien Bremsen durch das bestehende Bremssystem (130) sorgt.

3. Verfahren gemäß Anspruch 1 oder 2, bei welchem die Notfallbremsfunktion (132) für ein Verwenden des Anti-Rutsch-Systems des bestehenden Bremssystems (130) des Fahrzeugs sorgt.

4. Verfahren gemäß einem der Ansprüche 1 bis 3, bei welchem die Notfallbremsfunktion (132) für ein Steuern des eingesetzten Bremsmoments des Fahrzeugs auf der Grundlage der gewünschten Verzögerung des Fahrzeugs sorgt.

5. Verfahren gemäß einem der Ansprüche 1 bis 4, bei welchen die Notfallbremsfunktion (132) für ein anfängliches Bremsen mittels eines vorbestimmten Bremsmoments sorgt, das einem vergleichsweise sanften Bremsen entspricht.

6. Verfahren gemäß einem der Ansprüche 1 bis 5, bei welchem der Schritt des Aktivierens (S4a) der Notfallbremsfunktion (132) den Schritt eines Blockierens (S4b) einer Beschleunigungsfunktion umfasst.

7. Verfahren gemäß einem der Ansprüche 1 bis 6, bei welchem die Notfallbremsfunktion (132) für die Möglichkeit für den Fahrer des Fahrzeugs sorgt, das automatische Bremsen aufzuheben.

8. Verfahren gemäß einem der Ansprüche 1 bis 7, umfassend den Schritt eines Deaktivierens der Notfallbremsfunktion (132) und eines Aktivierens einer Haltepunkt-Bremsfunktion (134), wenn festgestellt wird, dass das Fahrzeug stillsteht und der Grund weiterhin vorhanden ist.

9. System (I) zum Notfallbremsen eines sich bewegenden Kraftfahrzeugs (1), umfassend Mittel (110) zum kontinuierlichen Überwachen durch Sensormittel (110), ob ein Grund vorliegt, die Bewegung des Fahrzeugs zu verhindern, wobei der Grund eine offene Tür, eine Belade- und Entladerampe, die ausgefahren ist, eine Motorhaube, die geöffnet wurde und eine Ladeluke, die geöffnet wurde, umfasst,
und Mittel zum automatischen Bremsen des Fahrzeugs, falls ein derartiger Grund vorliegt,
wobei die Mittel zum automatischen Bremsen des Fahrzeugs Mittel (100,130) zum Aktivieren einer Notfallbremsfunktion (132) umfassen, die für ein Bremsen mittels der Betriebsbremse des Fahrzeugs sorgen, Mittel (100,120) zum kontinuierlichen Bestimmen der tatsächlichen Geschwindigkeit des Fahrzeugs und Mittel (100,130) zum Verwenden der Geschwindigkeit als eine Grundlage zum Steuern eines eingesetzten Bremsmoments auf der Grundlage einer gewünschten Verzögerung des Fahrzeugs.

10. System gemäß Anspruch 9, bei welchem die Notfallbremsfunktion (132) für ein Verwenden des Systems des Fahrzeugs zum blockierfreien Bremsen durch das bestehende Bremssystem (130) sorgt.

11. System gemäß Anspruch 9 oder 10, bei welchem die Notfallbremsfunktion (132) für ein Verwenden des Anti-Rutsch-Systems des bestehenden Bremssystems (130) des Fahrzeugs sorgt.

12. System gemäß einem der Ansprüche 9 bis 11, bei welchem die Notfallbremsfunktion (132) für ein Steuern des eingesetzten Bremsmoments des Fahrzeugs auf der Grundlage der gewünschten Verzögerung des Fahrzeugs sorgt.

13. System gemäß einem der Ansprüche 9 bis 12, bei welchen die Notfallbremsfunktion (132) für ein anfängliches Bremsen mittels eines vorbestimmten Bremsmoments sorgt, das einem vergleichsweise sanften Bremsen entspricht.

14. System gemäß einem der Ansprüche 9 bis 13, bei welchem das Mittel (100) zum Aktivieren der Notfallbremsfunktion (132) Mittel (100, 140) zum Blockieren einer Beschleunigungsfunktion umfasst.

15. System gemäß einem der Ansprüche 9 bis 14, umfassend Mittel (100) zum Deaktivieren der Notfallbremsfunktion (132) und zum Aktivieren einer Haltepunkt-Bremsfunktion (134), wenn festgestellt wird, dass das Fahrzeug stillsteht und der Grund weiterhin vorhanden ist.

16. Kraftfahrzeug (1), ausgestattet mit einem System (I) zum Notfallbremsen eines Kraftfahrzeugs gemäß einem der Ansprüche 9 bis 15.

17. Computerprogramm (P) zum Notfallbremsen eines Kraftfahrzeugs, wobei das Programm (P) Programmcode umfasst, der, wenn er von einer elektronischen Steuereinheit (100) oder einem mit der elektronischen Steuereinheit (100) verbundenen anderen Computer (500) ausgeführt wird, die elektronische Steuereinheit (100) in die Lage versetzt, die Schritte gemäß den Ansprüchen 1 bis 8 durchzuführen.

18. Computerprogrammprodukt, umfassend ein digitales Speichermedium, welches das Computerprogramm gemäß Anspruch 17 speichert.

## Revendications

1. Procédé de freinage d'urgence d'un véhicule automobile en mouvement, comprenant les étapes consistant en
- la surveillance continue (S1) par des moyens de détection (110) s'il existe des motifs d'empêcher le véhicule de bouger, où ces motifs comprennent-une porte ouverte, une rampe de chargement et de déchargement qui s'est déployée, un capot de moteur qui s'est ouvert et une trappe de chargement qui s'est ouverte et
- le freinage automatique du véhicule s'il existe un tel motif, où l'étape consistant au freinage automatique du véhicule comprend l'étape consistant en
- l'activation (S2, S4a) d'une fonction de freinage d'urgence (132) permettant le freinage au moyen du frein de service du véhicule, et
- la détermination en continu (S2b) de la vitesse réelle du véhicule et l'utilisation de ladite vitesse comme base pour la commande du couple de freinage utilisé, sur la base de la décélération souhaitée du véhicule.

2. Procédé selon la revendication 1, dans lequel ladite fonction de freinage d'urgence (132) permet d'utiliser le système du véhicule pour le freinage sans blocage par son système de freinage existant (130).

3. Procédé selon la revendication 1 ou 2, dans lequel ladite fonction de freinage d'urgence (132) permet d'utiliser le système antidérapant du système de freinage existant du véhicule (130).

4. Procédé selon l'une quelconque des revendications 1 à 3, dans lequel ladite fonction de freinage d'urgence (132) permet de commander le couple de freinage du véhicule utilisé, sur la base de la décélération souhaitée du véhicule.

5. Procédé selon l'une quelconque des revendications 1 à 4, dans lequel ladite fonction de freinage d'urgence (132) permet le freinage initial au moyen d'un couple de freinage prédéterminé correspondant à un freinage relativement en douceur.

6. Procédé selon l'une quelconque des revendications 1 à 5, dans lequel l'étape d'activation (S4a) de la fonction de freinage d'urgence (132) comprend l'étape de blocage (S4b) de la fonction d'accélération.

7. Procédé selon l'une quelconque des revendications 1 à 6, dans lequel ladite fonction de freinage d'urgence (132) prévoit la possibilité pour le conducteur du véhicule de neutraliser ledit freinage automatique.

8. Procédé selon l'une quelconque des revendications 1 à 7, comprenant l'étape de désactivation de ladite fonction de freinage d'urgence (132) et d'activation d'une fonction de freinage de point d'arrêt (134) lorsque le véhicule s'avère être à l'arrêt et que ledit motif continue à s'appliquer.

9. Système (I) de freinage d'urgence d'un véhicule automobile en mouvement (1), comprenant un moyen (110) pour la surveillance continue par des moyens de détection (110) du fait qu'il existe des motifs d'empêcher le véhicule de se déplacer, où lesdits motifs comprennent une porte ouverte, une rampe de chargement et de déchargement qui s'est déployée, un capot de moteur qui s'est ouvert et une trappe de chargement qui s'est ouverte, ainsi que des moyens pour le freinage automatique du véhicule, s'il existe un tel motif,
dans lequel lesdits moyens pour le freinage automatique du véhicule comprennent des moyens (100, 130) pour l'activation d'une fonction de freinage d'urgence (132) qui permet le freinage au moyen du frein de service du véhicule, des moyens (100, 120) pour la détermination en continu de la vitesse réelle du véhicule et des moyens (100, 130) pour l'utilisation de ladite vitesse en tant que base pour la commande du couple de freinage utilisé, sur la base de la décélération souhaitée du véhicule.

10. Système selon la revendication 9, dans lequel ladite fonction de freinage d'urgence (132) permet d'utiliser le système du véhicule pour le freinage sans blocage par son système de freinage existant (130).

11. Système selon la revendication 9 ou 10, dans lequel ladite fonction de freinage d'urgence (132) permet d'utiliser le système antidérapant du système de freinage existant du véhicule (130).

12. Système selon l'une quelconque des revendications 9 à 11, dans lequel ladite fonction de freinage d'urgence (132) permet de commander le couple de freinage du véhicule utilisé, sur la base de la décélération souhaitée du véhicule.

13. Système selon l'une quelconque des revendications 9 à 12, dans lequel ladite fonction de freinage d'urgence (132) permet le freinage initial au moyen d'un couple de freinage prédéterminé correspondant à un freinage relativement en douceur.

14. Système selon l'une quelconque des revendications 9 à 13, dans lequel ledit moyen (100) pour l'activation de la fonction de freinage d'urgence (132) comprend un moyen (100, 140) pour le blocage de la fonction d'accélération.

15. Système selon l'une quelconque des revendications 9 à 14, comprenant un moyen (100) pour la désactivation de ladite fonction de freinage d'urgence (132) et l'activation d'une fonction de freinage de point d'arrêt (134) lorsque le véhicule s'avère être à l'arrêt et que ledit motif continue à appliquer.

16. Véhicule à moteur (1) pourvu d'un système (I) pour le freinage d'urgence d'un moteur de véhicule selon l'une quelconque des revendications 9 à 15.

17. Programme informatique (P) pour le freinage d'urgence d'un véhicule automobile, lequel programme (P) comprend un code de programme qui, lorsqu'il est exécuté par une unité de commande électronique (100) ou un autre ordinateur (500) connecté à l'unité de commande électronique (100), permet à l'unité de commande électronique (100) d'effectuer des étapes selon les revendications 1 à 8.

18. Produit de programme informatique comprenant un support de stockage numérique qui stocke le programme informatique selon la revendication 17.
